(19) **Europäisches Patentamt**
**European Patent Office**
**Office européen des brevets**

(11) **EP 4 501 735 A1**

(12) **EUROPEAN PATENT APPLICATION**
published in accordance with Art. 153(4) EPC

(43) Date of publication:
**05.02.2025 Bulletin 2025/06**

(51) International Patent Classification (IPC):
**B60W 50/00** (2006.01)    **B60W 60/00** (2020.01)
**B60W 40/02** (2006.01)    **G06V 10/70** (2022.01)

(21) Application number: **23870043.9**

(22) Date of filing: **21.08.2023**

(86) International application number:
**PCT/CN2023/113976**

(87) International publication number:
**WO 2024/066798 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.09.2022 CN 202211186055**

(71) Applicant: **Tencent Technology (Shenzhen)
Company Limited
Shenzhen, Guangdong 518057 (CN)**

(72) Inventor: **LI, Dehui
Shenzhen, Guangdong 518057 (CN)**

(74) Representative: **Reddie & Grose LLP
The White Chapel Building
10 Whitechapel High Street
London E1 8QS (GB)**

(54) **VEHICLE CONTROL METHOD AND APPARATUS, AND DEVICE AND STORAGE MEDIUM**

(57)    Disclosed in the present application are a vehicle control method and apparatus, and a device and a storage medium. The embodiments of the present application can be applied to the field of autonomous driving or the field of assisted driving. The vehicle control method provided in the embodiments of the present application implements sliced sensing. For any road section, a road image set of the road section under different environmental conditions may be constructed, and a sensing model of the road section under the different environmental conditions is trained according to the road image set of the road section under the different environmental conditions, so as to form a sensing model library. In this way, during a travelling process, a vehicle to be controlled can dynamically call, according to a road section to be travelled on the way and a target environmental condition when said vehicle is in the corresponding road section to be travelled, the most adapted target sensing model from a sensing model library to perform sensing. Since different sensing models are trained for different road sections and different environmental conditions, all possible situations during a vehicle travelling process can be accurately sensed, thereby ensuring the driving safety.

```
Acquire current traveling information of a to-be-controlled vehicle, the
traveling information being configured for indicating a to-be-traveled
road segment of the to-be-controlled vehicle during traveling and a
target environmental condition when the to-be-controlled vehicle is on a
corresponding to-be-traveled road segment                                    ─ 301

                                    │
                                    ▼

Acquire a target perception model of the to-be-traveled road segment
under the target environmental condition from a perception model
library, the perception model library being configured to store
perception models of a plurality of road segments under different
environmental conditions, and for any one of the road segments, the
perception models of the road segment under the different
environmental conditions being trained based on road image sets of the
road segment under the different environmental conditions                     ─ 302

                                    │
                                    ▼

Call the target perception model to perform a perception task on the to-
be-traveled road segment to obtain a perception result, and control,
based on the perception result, the to-be-controlled vehicle to travel on
the to-be-traveled road segment                                               ─ 303
```

**FIG. 3**

**Description**

RELATED APPLICATION

This application claims priority to Chinese Patent Application No. 202211186055.7, filed with the China National Intellectual Property Administration on September 27, 2022 and entitled "VEHICLE CONTROL METHOD AND APPARATUS, AND DEVICE AND STORAGE MEDIUM".

FIELD OF THE TECHNOLOGY

This application relates to the field of intelligent driving, and in particular, to a vehicle control technology.

BACKGROUND OF THE DISCLOSURE

Driving perception, as the first link in autonomous driving or assisted driving, is an important link for the interaction between a vehicle and the outside world. The key to driving perception is to enable the vehicle to better simulate a driver's perception capability, to implement safe driving of the vehicle on a road.
In related art, implementation of vehicle control mainly includes the following operations. First, a road image set that includes a large quantity of road images is constructed. Then, a perception model is trained based on the road image set, and the perception model is deployed on the vehicle for use, so that the vehicle is controlled, based on the perception model, to travel on the road.
According to this manner, the perception model is needed to be capable of accurately perceiving all possible situations that may occur during traveling of the vehicle. However, a capacity of the perception model is limited, and the vehicle may face various situations when traveling in the real world. Therefore, this method is difficult to achieve accurate perception, consequently affecting driving safety.

SUMMARY

Embodiments of this application provide a vehicle control method and apparatus, a device, and a storage medium, to achieve accurate perception and ensure driving safety. The technical solutions are as follows:
According to one aspect, a vehicle control method is provided, performed by a computer device, the method including:

   acquiring current traveling information of a vehicle, the current traveling information indicating at least one road segment being or to be travelled by the vehicle and an environmental condition corresponding a respective road segment of the at least one road segment;

   acquiring, from a perception model library, a perception model for the at least one road segment and the corresponding environmental condition, the perception model library storing a plurality of perception models each for one of a plurality of road segments under one of a plurality of environmental conditions, wherein each perception model is trained based on a road image set of the respective road segment each under one of the plurality of environmental conditions; and

   performing a perception task on the at least one road segment using the acquired perception model to obtain a perception result for controlling the vehicle to travel on the at least one road segment.

In a possible implementation, the environmental condition includes a combination of different lighting categories and different weather categories, or the environmental condition includes different lighting categories, or the environmental condition includes different weather categories.
According to another aspect, a vehicle control method is provided, performed by a computer device, the method including:

   acquiring current traveling information of a vehicle, the current traveling information indicating at least one road segment being or to be travelled by the vehicle and an environmental condition corresponding to a respective road segment of the at least one road segment;

   searching for a perception model for the at least one road segment under the corresponding environmental condition from a perception model library, the perception model library storing a plurality of perception models each for one of a plurality of road segments under one of a plurality of environmental conditions, where each perception model is trained based on a road image set of the respective road segment each under one of the plurality of environmental conditions; and

delivering the searched perception model to the vehicle, the vehicle being configured to: perform a perception task on the at least one road segment using the delivered perception model to obtain a perception result for controlling the vehicle to travel on the at least one road segment.

According to another aspect, a vehicle control apparatus is provided, deployed on a computer device, the apparatus including:

a first acquisition module, configured to acquire current traveling information of a vehicle, the current traveling information indicating at least one road segment being or to be travelled by the vehicle and an environmental condition corresponding to a respective road segment of the at least one road segment;

a second acquisition module, configured to acquire, from a perception model library, a perception model for the at least one road segment and the corresponding environmental condition, the perception model library storing a plurality perception models each for one of a plurality of road segments under one of a plurality of environmental conditions, and where each perception model is trained based on a road image set of the respective road segment each under one of the plurality of environmental conditions; and

a control module, configured to perform a perception task on the at least one to-be-traveled road segment using the acquired perception model to obtain a perception result for controlling the vehicle to travel on the at least one road segment.

According to another aspect, a vehicle control apparatus is provided, deployed on a computer device, the apparatus including:

a first acquisition module, configured to acquire current traveling information of a vehicle, the current traveling information indicating at least one road segment being or to be travelled by the vehicle and an environmental condition corresponding to a respective road segment of the at least one road segment;

a second acquisition module, configured to search for a perception model for the at least one road segment and the corresponding environmental condition from a perception model library, the perception model library storing a plurality of perception models each for one of a plurality of road segments under one of a plurality of environmental conditions, and where each perception model is trained based on a road image set of the respective road segment each under one of the plurality of environmental conditions; and

a delivery module, configured to deliver the searched perception model to the vehicle, the vehicle being configured to: perform a perception task on the at least one road segment using the delivered perception model to obtain a perception result for controlling the vehicle to travel on the at least one road segment.

According to another aspect, a computer device is provided, the device including a processor and a memory, the memory having a computer program stored therein, the computer program being loaded and executed by the processor to perform the foregoing vehicle control method.

According to another aspect, a computer-readable storage medium is provided, the storage medium having a computer program stored thereon, the computer program being loaded and executed by a processor to perform the foregoing vehicle control method.

According to another aspect, a computer program product is provided, the computer program product including a computer program stored in a computer-readable storage medium, a processor of a computer device reading the computer program from the computer-readable storage medium, and the processor executing the computer program to cause the computer device to perform the foregoing vehicle control method.

The vehicle control solution provided in embodiments of this application can implement slice-based perception. In detail, for any one of road segments obtained by road segmentation, road image sets of the road segment under different environmental conditions are constructed, so that perception models of the road segment under the different environmental conditions are trained based on the road image sets of the road segment under the different environmental conditions, to form a perception model library. A perception model is configured to perform a perception task on a vehicle under an environmental condition on a road segment. In this way, during traveling of a vehicle, the most adapted perception model can be dynamically called from the perception model library for driving perception based on at least one road segment of the vehicle being or to be travelled by the vehicle and an environmental condition corresponding to a respective road segment of the at least one road segment. Because different perception models are trained for different road segments and different environmental conditions, during the traveling of the vehicle, the most adapted perception model can be used for driving perception for different to-be-traveled road segments and the different environmental conditions. Therefore, through a plurality of adapted perception models, all possible situations that may occur during the traveling of the vehicle can be accurately perceived, providing a good perception effect, and ensuring driving safety.

BRIEF DESCRIPTION OF THE DRAWINGS

To describe the technical solutions of embodiments of this application more clearly, the following briefly introduces the accompanying drawings required for describing the embodiments. Apparently, the accompanying drawings in the following description show only some embodiments of this application, and a person of ordinary skill in the art may still derive other drawings from these accompanying drawings without creative efforts.

FIG. 1 is a schematic diagram of an implementation environment of a vehicle control method according to an exemplary embodiment.

FIG. 2 is a schematic diagram of another implementation environment of a vehicle control method according to an exemplary embodiment.

FIG. 3 is a flowchart of a vehicle control method according to an exemplary embodiment.

FIG. 4 is a flowchart of another vehicle control method according to an exemplary embodiment.

FIG. 5 is a flowchart of another vehicle control method according to an exemplary embodiment.

FIG. 6 is a schematic diagram of a structure of a deep learning model according to an exemplary embodiment.

FIG. 7 is a schematic diagram of a structure of another deep learning model according to an exemplary embodiment.

FIG. 8 is a schematic diagram of a structure of a vehicle control apparatus according to an exemplary embodiment.

FIG. 9 is a schematic diagram of a structure of another vehicle control apparatus according to an exemplary embodiment.

FIG. 10 is a schematic diagram of a structure of a computer device according to an exemplary embodiment.

FIG. 11 is a schematic diagram of a structure of another computer device according to an exemplary embodiment.

DESCRIPTION OF EMBODIMENTS

To make the objectives, technical solutions, and advantages of this application clearer, the following further describes implementations of this application in detail with reference to the accompanying drawings.

In this application, the terms "first", "second", and the like are configured for distinguishing identical or similar items with substantially the same effects and functions. There is no logical or temporal dependency between the "first", "second", and "nth" (if any), and no limitation is imposed on the quantity and execution order. Although the following descriptions use the terms first, second, and the like to describe various elements, these elements are not be limited by the terms.

The terms are merely configured for distinguishing an element from another element. For example, a first element may be referred to as a second element, and similarly, the second element may be referred to as the first element without departing from a scope of various examples. Both the first element and the second element may be elements, and in some cases, may be separate and different elements.

At least one means one or more than one. For example, at least one element can be one element, two elements, three elements, or any integer number of elements greater than or equal to one. However, a plurality of means two or more than two. For example, a plurality of elements may be two elements, three elements, or any integer number greater than or equal to two.

Information (including but not limited to user equipment information, user personal information, and the like), data (including but not limited to data used for analysis, stored data, displayed data, and the like), and signals involved in this application are all authorized by the users or fully authorized by all parties, and collection, use, and processing of related data need to comply with relevant laws, regulations, and standards of relevant countries and regions.

First, abbreviations and key terms described in embodiments of this application are introduced.

1. Vehicle

In embodiments of this application, the vehicle is a vehicle that requires driver assistance or does not require driver control at all, for example, the vehicle may include an autonomous driving car, an unmanned vehicle, a computer-driven car, a driverless vehicle, and a self-driving car.

As an automatic vehicle, the vehicle mentioned in embodiments of this application can automatically travel on a road without the need for driver control.

2. Driving perception

As the first link in autonomous driving or assisted driving, the driving perception is an important link for the interaction between a vehicle and the outside world. The key to driving perception is to be capable of enabling the vehicle to better simulate a driver's perception capability, to implement safe driving of the vehicle on a road.

The driving perception is achieved based on a perception algorithm in the field of autonomous driving or assisted driving. In other words, the perception algorithm is an important part of implementing the autonomous driving or the assisted driving. In recent years, with the development of a deep learning technology, the perception algorithm have also been greatly improved. Generally, the perception algorithm implement the driving perception based on a perception model.

For example, the driving perception can detect various obstacles and collect various pieces of information on the road. The obstacles include dynamic obstacles and static obstacles, such as other vehicles, pedestrians, buildings. The various pieces of information on the road include but are not limited to drivable areas, lane lines, traffic signs, traffic lights, and the like. In addition, the driving perception requires the assistance of various sensors. A type of the sensor includes but is not limited to a camera, a laser radar, a millimeter-wave radar, and the like.

3. Slice-based perception

In embodiments of this application, the slice-based perception is relative to a single perception model in related art.

In related art, the single perception model is used for driving perception. In other words, the same perception model is used for all vehicles, the road segments, and all environmental conditions. This requires that the perception model can accurately perceive all possible situations that may occur during traveling of a vehicle. However, a capacity of the single perception model is limited, for example, a quantity of layers of the model is limited or a quantity of feature channels in each layer is limited. In addition, a vehicle may face various situations when traveling in the real world, including various long tail situations that are difficult to perceive, such as a tree in the middle of the road, blurry pedestrians crossing the road at night. In addition, the vehicle also faces different environmental conditions, such as different lighting categories such as day and night, and different weather categories such as rainy days, snowy days, and foggy days.

Therefore, the single perception model is difficult to adapt to the various situations mentioned above. In other words, it is difficult to achieve accurate perception based on the single perception model, in other words, perception failure may occur. The perception failure directly affects driving safety. For example, if the perception failure occurs in an autonomous driving mode at high speed, it may cause serious traffic accidents. In conclusion, based on safety considerations, a current level of publics trusting in autonomous driving is low, which increases the difficulty of implementing and promoting autonomous driving.

However, for the slice-based perception, corresponding perception models are trained for different road segments and different environmental conditions, to form a perception model library. When the perception model is used, the most adapted target perception model is dynamically selected, based on a to-be-traveled road segment of a to-be-controlled vehicle during traveling and a target environmental condition when the to-be-controlled vehicle is on a corresponding to-be-traveled road segment, from the perception model library to perform a perception task. The slice-based perception can achieve more accurate perception and greatly reduce the perception difficulty of the model, thereby achieving more precise and robust perception effects, improving user experience, and ultimately promoting the implementation and promotion of the autonomous driving.

The following describes an implementation environment included in a vehicle control method provided in embodiments of this application.

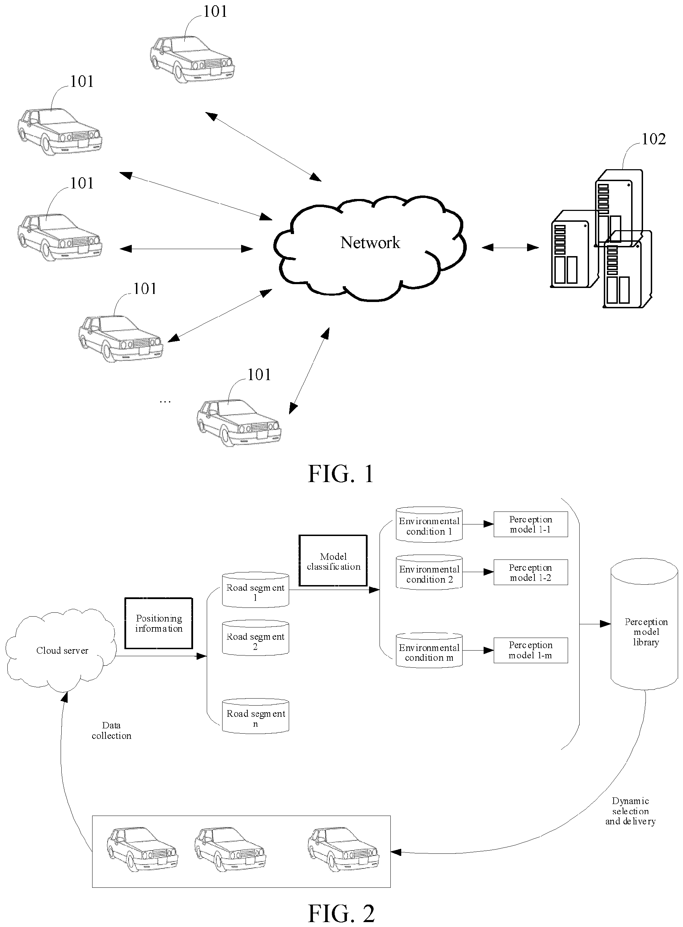

FIG. 1 is a schematic diagram of an implementation environment of a vehicle control method according to an exemplary embodiment. The vehicle control method is applied to an autonomous driving scenario or an assisted driving scenario, and the vehicle control method provides a slice-based driving perception solution. The vehicle control method provided in this embodiment of this application may be executed by a computer device. The computer device may be a terminal, or a terminal and a server.

In this embodiment of this application, the terminal may be in a vehicle, and the server may be a cloud server. Refer to FIG. 1, the implementation environment includes vehicles 101 and a cloud server 102. The vehicles 101 and the cloud server 102 may communicate via a mobile network or a wireless network, which is not limited in this application.

In a possible implementation, an adapted application client is installed on a terminal in the vehicle 101, and the vehicle 101 communicates with the cloud server 102 through the application client, which is not limited in this application. For example, the terminal may be a smart phone, a tablet computer, an on-board terminal, a smart speaker, or a smartwatch, but is not limited thereto.

The cloud server 102 may be an independent physical server, may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), or big data and an artificial intelligence platform.

In another possible implementation, the cloud server 102 included in the implementation environment may be any server that provides background services, which is not limited in this application.

In another possible implementation, FIG. 2 is a schematic diagram of another implementation environment of a vehicle control method according to an exemplary embodiment. FIG. 2 is further described based on FIG. 1.

With reference to FIG. 2, the vehicle control method mainly includes the following operations.

Operation 1: Collect data. The operation is configured for acquiring road images from vehicles located on various roads. In other words, in this embodiment of this application, massive road images are reflowed from the vehicles located on the various roads, so that the cloud server can acquire the road images.

Operation 2: Segment a road into segments. The operation is configured for segmenting a road into road segments, for example, as shown in FIG. 2, the road is segmented into road segment 1, road segment 2, ..., and road segment n.

Operation 3: Divide an environment. The operation is configured for dividing the environment, for example, as shown in FIG. 2, the environment is divided into environmental condition 1, environmental condition 2, ..., and environmental condition m. For the same road segment, the road segment is mapped to different perception units based on different environmental conditions. In other words, the different perception units are the road segment under the different environmental conditions.

Operation 4: Construct road image sets of the perception units. The operation is configured for constructing road image sets of road segments under the different environmental conditions based on the massive reflowed road images.

Operation 5: Construct a perception model library. The operation is configured for training perception models of the perception units based on the road image sets of the perception units, for example, as shown in FIG. 2, perception model 1-1, perception model 1-2, ..., and perception model 1-m, to form the perception model library. In other words, for the same road segment, perception models of the road segment under the different environmental conditions are trained based on the road image sets of the road segment under the different environmental conditions.

Operation 6: Acquire vehicle traveling information and select a model. The operation is configured for dynamically selecting and delivering, based on road segment information during traveling of a vehicle and an environmental condition when the vehicle is on a corresponding road segment, the most adapted perception model from the perception model library to perform a perception task.

Operation 7: Reflow data and iterate the model. The vehicle automatically transmits the road images during the traveling, to implement a closed-loop iteration of model training-model delivery-data reflow-model training.

In conclusion, a slice-based perception solution uses a method of breaking the whole into parts, so that different perception units are segmented based on different road segments and different environmental conditions, the road image sets of the perception units are constructed, and customized perception models of the perception units are trained based on the road image sets of the perception units. In this way, a complete perception model library is established in the cloud. When the model is used, the most adapted perception model is dynamically selected, based on the road segment during the traveling of the vehicle and the environmental condition when the vehicle is on the corresponding road segment, from the perception model library of the cloud server to perform the perception task.

In other words, in embodiments of this application, roads in the real world are segmented into a large quantity of road segments. For any one of segmented road segments, road image sets of the road segment under different environmental conditions are constructed, so that perception models of the road segment under the different environmental conditions are trained based on the road image sets of the road segment under the different environmental conditions, to form the perception model library. In this way, during the traveling, the vehicle can dynamically call the most adapted perception model from the perception model library for driving perception based on the road segment during the traveling and the environmental condition when the vehicle is on the corresponding road segment.

To make the objectives, technical solutions, and advantages of this application clearer, the following further describes the vehicle control method provided in this application in detail with reference to the following implementations. The embodiments described herein are only used for describing this application, instead of limiting this application. In addition, technical features included in the implementations that are described below may be combined with each other provided that no conflict occurs.

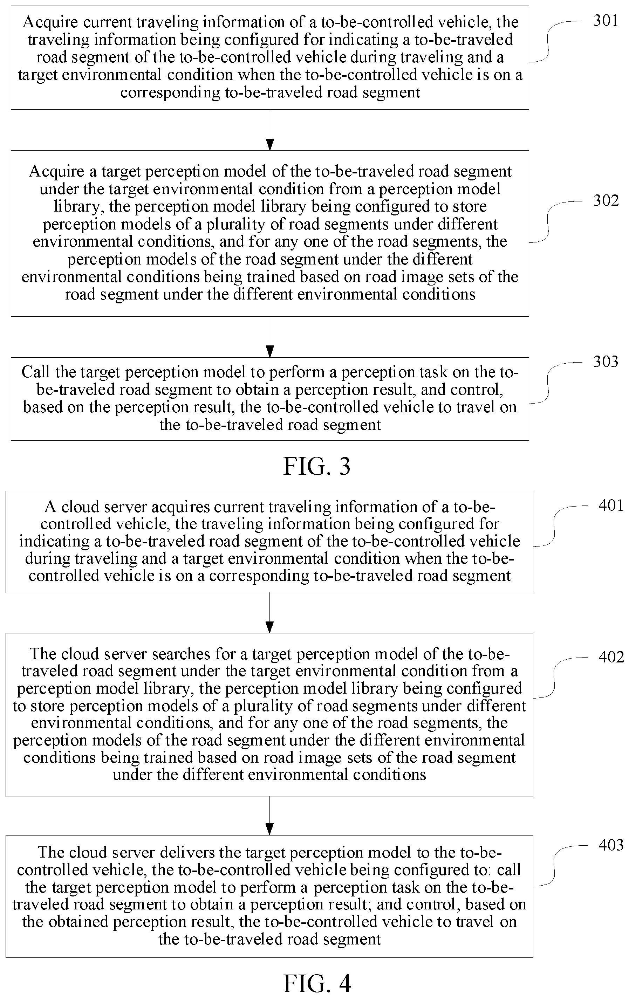

FIG. 3 is a flowchart of a vehicle control method according to an exemplary embodiment. A perspective of a vehicle performing the method is used as an example. Refer to FIG. 3. The flowchart of the method provided in this embodiment of this application includes:

301: Acquire current traveling information of a to-be-controlled vehicle, the traveling information being configured for indicating a to-be-traveled road segment of the to-be-controlled vehicle during traveling and a target environmental condition when the to-be-controlled vehicle is on a corresponding to-be-traveled road segment.

In this embodiment of this application, the to-be-controlled vehicle is generally any vehicle controlled by using a slice-based perception solution. Road segments are obtained by segmenting a road. For example, a road can be segmented into a plurality of road segments to form a plurality of road slices or a plurality of road units. The to-be-traveled road segment is a road segment that the to-be-controlled vehicle needs to pass through during traveling.

For example, there may be a plurality of to-be-traveled road segments, and the to-be-traveled road segments may be road segments on a current navigation route planned by the to-be-controlled vehicle. The to-be-controlled vehicle may have just planned the navigation route and has not passed through the road segments. Alternatively, there is one to-be-traveled road segment, the to-be-traveled road segment may be a to-be-traveled road segment where the to-be-controlled vehicle is currently located, which is not limited in this application.

In a possible implementation, the environmental condition includes a combination of different lighting categories and different weather categories, or the environmental condition includes different lighting categories, or the environmental condition includes different weather categories, which is not limited in this application. A quantity of categories for lighting and weather can be set based on an actual requirement, which is not limited in this application. In a possible implementation, the current traveling information may be acquired in real-time.

302: Acquire a target perception model of the to-be-traveled road segment under the target environmental condition from a perception model library, the perception model library being configured to store perception models of a plurality of road segments under different environmental conditions, and for any one of the road segments, the perception models of the road segment under the different environmental conditions being trained based on road image sets of the road segment under the different environmental conditions.

The to-be-controlled vehicle can actively request the cloud server to deliver a target perception model that matches the traveling information, or the cloud server can also actively push, based on the traveling information reported by the to-be-controlled vehicle, the target perception model that matches the traveling information to the to-be-controlled vehicle, which is not limited in this application. The target perception model that matches the traveling information may be a target perception model of the to-be-traveled road segment in a target environment.

As shown in FIG. 2, the perception model library is stored on the cloud server, so that the perception model library is also referred to as a cloud perception model library. A road segment corresponds to a plurality of perception models, which correspond to different environmental conditions. FIG. 2 is used as an example. It is assumed that a road is segmented into a plurality of road segments, namely road segment 1 to road segment n. For road segment 1, in this embodiment of this application, perception models (perception model 1-1 to perception model 1-m) of road segment 1 under different environmental conditions (environmental condition 1 to environmental condition m) may be trained. The perception models of road segment 1 under the different environmental conditions are trained by the cloud server based on road image sets of road segment 1 under the different environmental conditions. n and m are both positive integers. In other words, there is a correspondence between the perception model, the road segment, and the environmental condition. If the road segment and the environmental condition are known, the target perception model can be acquired from the perception model library based on the correspondence.

If the to-be-traveled road segment is road segment 1 and the target environmental condition is environmental condition 1, the acquired target perception model is perception model 1-1 trained based on the road image sets of road segment 1 under environmental condition 1.

In a possible implementation, all matching target perception models may be delivered to the to-be-controlled vehicle in advance after path planning. The path planning generally generates the current navigation route. In this case, a plurality of to-be-traveled road segments are obtained. The plurality of to-be-traveled road segments may be the road segments on the current navigation route of the to-be-controlled vehicle. To acquire all the matching target perception models in advance, target perception models of the to-be-traveled road segments under corresponding target environmental conditions can be acquired from the perception model library in response to acquisition of the plurality of to-be-traveled road segments. A target perception model matches a to-be-traveled road segment and a target environmental condition when the to-be-controlled vehicle is on a corresponding to-be-traveled road segment.

In another possible implementation, the target perception model may be acquired in real time. In other words, the target perception model is acquired when the to-be-controlled vehicle is on the to-be-traveled road segment. In this case, there is one to-be-traveled road segment. In other words, the to-be-traveled road segment is the to-be-traveled road segment where the to-be-controlled vehicle is currently located. A manner of acquiring the target perception model of the to-be-traveled road segment under the target environmental condition from the perception model library may be that the to-be-controlled vehicle acquires the target perception model of the to-be-traveled road segment under the target environmental condition from the perception model library. The acquired target perception model matches the to-be-traveled road segment where the to-be-controlled vehicle is currently located, and the target environmental condition when the to-be-controlled vehicle is on the corresponding to-be-traveled road segment.

303: Call the target perception model to perform a perception task on the to-be-traveled road segment to obtain a perception result, and control, based on the perception result, the to-be-controlled vehicle to travel on the to-be-traveled road segment.

The perception task can be configured for detecting various obstacles and collecting various pieces of information on a road. The perception task is performed to obtain the perception result, and then the to-be-controlled vehicle is controlled, based on the perception result, to travel on the to-be-traveled road segment, thereby implementing safe driving of the vehicle on the road.

In this embodiment of this application, the implementation of 303 may alternatively be different depending on different manners of acquiring the target perception model. In a case that all the matching target perception models are acquired in advance, the calling the target perception model to perform a perception task on the to-be-traveled road segment to obtain a perception result, and controlling, based on the perception result, the to-be-controlled vehicle to travel on the to-be-traveled road segment includes: calling, during the traveling of the to-be-controlled vehicle, when the to-be-controlled vehicle reaches a to-be-traveled road segment, a target perception model matching a to-be-traveled road segment where the to-be-controlled vehicle is currently located from the plurality of target perception models to perform the perception task, and controlling, based on the obtained perception result, the to-be-controlled vehicle to travel on the to-be-traveled road segment where the to-be-controlled vehicle is currently located. In a possible implementation, the perception task may be performed in real-time, and the to-be-controlled vehicle may be controlled in real time.

In a case that the target perception model is acquired in real time, the calling the target perception model to perform a perception task on the to-be-traveled road segment to obtain a perception result, and controlling, based on the perception result, the to-be-controlled vehicle to travel on the to-be-traveled road segment includes: calling the acquired target perception model to perform the perception task on the to-be-traveled road segment where the to-be-controlled vehicle is currently located, and controlling, based on the obtained perception result, the to-be-controlled vehicle to travel on the to-be-traveled road segment where the to-be-controlled vehicle is currently located.

The vehicle control solution provided in embodiments of this application can implement slice-based perception. In detail, for any one of road segments obtained by road segmentation, road image sets of the road segment under different environmental conditions are constructed, so that perception models of the road segment under the different environmental conditions are trained based on the road image sets of the road segment under the different environmental conditions, to form a perception model library. A perception model is configured to perform a perception task on a vehicle under an environmental condition on a road segment. In this way, during traveling of a to-be-controlled vehicle, the most adapted target perception model can be dynamically called from the perception model library for driving perception based on a to-be-traveled road segment of the to-be-controlled vehicle during the traveling and an environmental condition when the to-be-controlled vehicle is on a corresponding to-be-traveled road segment. Because different perception models are trained for different road segments and different environmental conditions, during the traveling of the vehicle, the most adapted target perception model can be used for driving perception for different to-be-traveled road segments and the different environmental conditions. Therefore, through a plurality of adapted target perception models, all possible situations that may occur during the traveling of the vehicle can be accurately perceived, providing a good perception effect, and ensuring driving safety.

FIG. 4 is a flowchart of another vehicle control method according to an exemplary embodiment. A perspective of the cloud server performing the vehicle control method is used as an example. Refer to FIG. 4. The flowchart of the method provided in this embodiment of this application includes:

401: The cloud server acquires current traveling information of a to-be-controlled vehicle, the traveling information being configured for indicating a to-be-traveled road segment of the to-be-controlled vehicle during traveling and a target environmental condition when the to-be-controlled vehicle is on a corresponding to-be-traveled road segment.

In this embodiment of this application, the to-be-controlled vehicle can automatically report the current traveling information to the cloud server, which is not limited in this application.

402: The cloud server searches for a target perception model of the to-be-traveled road segment under the target environmental condition from a perception model library, the perception model library being configured to store perception models of a plurality of road segments under different environmental conditions, and for any one of the road segments, the perception models of the road segment under the different environmental conditions being trained based on road image sets of the road segment under the different environmental conditions.

In this embodiment of this application, the cloud server trains perception models of the plurality of road segments under the different environmental conditions based on road image sets of the plurality of road segments under the different environmental conditions to obtain the perception model library.

The first operation in constructing the perception model library is to segment a road into segments. A reason why the road needs to be segmented is that vegetation, buildings, road facility styles, and the like in different areas are different. Even for the same area, vegetation, buildings, road facility styles, and the like of different road segments in the area may also be different. To make the perception model have a better perception effect, the road needs to be segmented into a large quantity of small road segments.

For any one of roads within a target geographic range, the road is segmented to obtain road segments of the road. For example, the target geographic range may be a world range or a national range, which is not limited in this application.

In a possible implementation, all types of roads may be segmented using the same segmentation granularity. For example, each type of road may be segmented using a segmentation granularity of a plurality of kilometers (for example, 10 kilometers), to segment each road into a large quantity of small road segments. Alternatively, to make the perception model have a better perception effect, various roads can be segmented based on road types. In other words, different types of roads can alternatively be segmented based on different segmentation granularities. For example, a road with a more complex condition corresponds a smaller segmentation granularity. Specifically, for any one of the roads, a segmentation granularity matching a road type of the road is acquired; and the road is segmented based on the segmentation granularity to obtain road segments of the road. An overlapping area exists between any two adjacent road segments of the road.

For example, the road types include, but are not limited to, highways, urban expressways, urban roads, and country roads, which is not limited in this application. In addition, to avoid disconnected areas between adjacent road segments, a specific overlapping area (for example, 500 meters) is provided between any two adjacent road segments, which is not limited in this application.

In another possible implementation, in an example in which environmental factors include lighting and weather, for the same road segment, there are different lighting categories such as day and night, and different weather categories such as sunny days, rainy days, snowy days, and foggy days. Differences in environmental conditions have a large impact on image formation, consequently affecting a perception effect of a perception model. Therefore, it is necessary to map each road unit into more perception units based on the foregoing different lighting and weather. Therefore, in this embodiment of this application, the environmental conditions may be further divided. To be specific, for the same road segment, the road segment is mapped to different perception units based on the different environmental conditions. In other words, the different perception units are the road segment under the different environmental conditions.

Then, in this embodiment of this application, road image sets of the perception units are constructed. In other words, the road image sets of the road segment under the different environmental conditions are constructed, and the perception model library is constructed based on the road image sets. To be specific, perception models of the perception units are trained based on the road image sets of the perception units, to form the perception model library. In other words, for the same road segment, perception models of the road segment under the different environmental conditions are trained based on the road image sets of the road segment under the different environmental conditions. A road image set includes a road image of the road segment under an environmental condition.

In addition, there are generally a plurality of perception tasks related to autonomous driving or assisted driving, such as target detection, semantic segmentation, and image classification. In embodiments of this application, a perception model library can be configured to perform a perception task, which is not limited in this application. Correspondingly, training the perception models of the road segment under the different environmental conditions based on the road image sets of the road segment under the different environmental conditions includes: training, for a target perception task, the perception models of the road segment under the different environmental conditions based on the road image sets of the road segment under the different environmental conditions and a model training method matching the target perception task, the trained perception model being configured to perform the target perception task, and the target perception task being any perception task related to the autonomous driving or the assisted driving.

403: The cloud server delivers the target perception model to the to-be-controlled vehicle, the to-be-controlled vehicle being configured to: call the target perception model to perform a perception task on the to-be-traveled road segment to obtain a perception result; and control, based on the obtained perception result, the to-be-controlled vehicle to travel on the to-be-traveled road segment.

The operation is the same as the foregoing operation 303. Details are not described herein again.

The vehicle control solution provided in embodiments of this application can implement slice-based perception. In detail, for any one of road segments obtained by road segmentation, road image sets of the road segment under different environmental conditions are constructed, so that perception models of the road segment under the different environmental conditions are trained based on the road image sets of the road segment under the different environmental conditions, to form a perception model library. A perception model is configured to perform a perception task on a vehicle under an environmental condition on a road segment. In this way, during traveling of a to-be-controlled vehicle, the most adapted target perception model can be dynamically called from the perception model library for driving perception based on a to-be-traveled road segment of the to-be-controlled vehicle during the traveling and an environmental condition when the to-be-controlled vehicle is on a corresponding to-be-traveled road segment. Because different perception models are trained for different road segments and different environmental conditions, during the traveling of the vehicle, the most adapted target perception model can be used for driving perception for different to-be-traveled road segments and the different environmental conditions. Therefore, through a plurality of adapted target perception models, all possible situations that may occur during the traveling of the vehicle can be accurately perceived, providing a good perception effect, and ensuring driving safety.

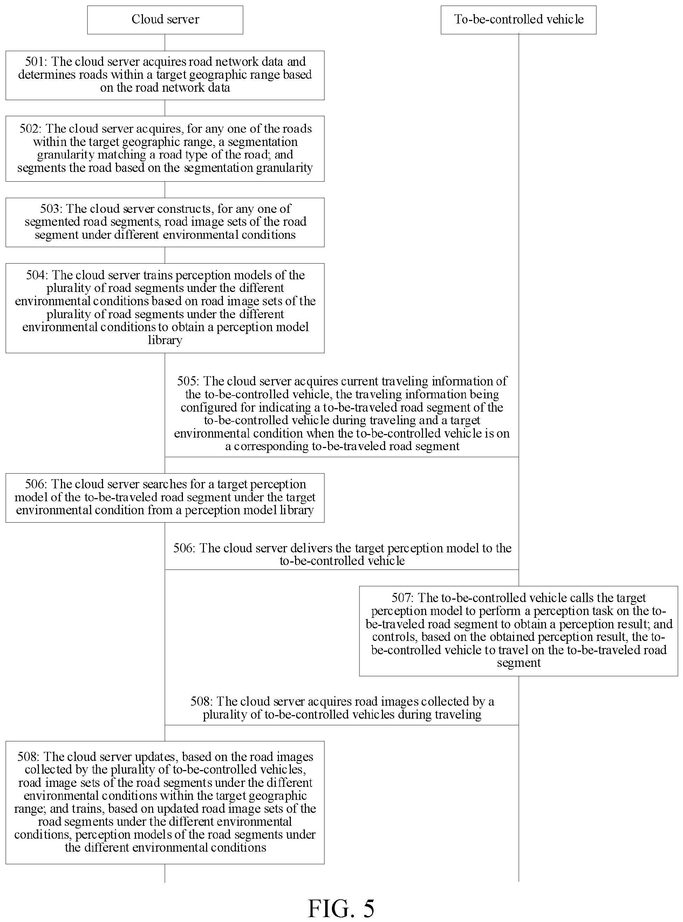

FIG. 5 is a flowchart of another vehicle control method according to an exemplary embodiment. Interaction between the cloud server and to-be-controlled vehicle is used as an example. Refer to FIG. 5. The flowchart of the method provided in this embodiment of this application includes:

501: The cloud server acquires road network data and determines roads within a target geographic range based on the road network data.

In this embodiment of this application, the cloud server can pull a map via a map interface, and then acquires the road network data via the map, which is not limited in this application.

502: The cloud server acquires, for any one of the roads within the target geographic range, a segmentation granularity matching a road type of the road; and segments the road based on the segmentation granularity.

The operation is the same as the foregoing operation 402. Details are not described herein again.

503: The cloud server constructs, for any one of segmented road segments, road image sets of the road segment under different environmental conditions.

In an example in which the target geographic range is a world range, because the road network is spread all over the world, it is difficult to use a dedicated collection vehicle to collect samples from all roads, all lighting, and all weather situations in the real world. Therefore, this embodiment of this application may collect road images in a manner of crowdsourcing collection. To be specific, massive road images can be reflowed from vehicles all over the world by cooperating with various device manufacturers and car manufacturers, and the reflowed road images are automatically divided into corresponding road segments in the cloud based on position information when the vehicles collect or reflow the road images, to obtain sample data sets of the road segments. In addition, for the same road segment, there are differences in environmental conditions. Therefore, the sample data sets of the road segments need to be further divided based on the environmental conditions, to form road image sets of the road segments under the different environmental conditions. The device manufacturers are merchants that sell vehicle accessories.

To be specific, constructing the road image sets of the road segment under the different environmental conditions includes: acquiring road images collected by a plurality of vehicles within the target geographic range and position information of the plurality of vehicles when the road images are collected; classifying, based on the position information, the acquired road images into different road segments within the target geographic range to obtain sample data sets of the road segments within the target geographic range; and classifying, for any one of the road segments, the sample data set of the road segment based on a divided environmental condition to obtain road image sets of the road segment under the different environmental conditions.

For the sample data sets of the road segments, relying on manual environment differentiation on massive data is inefficient and costly. In view of this, an environment classification model can be used to automatically identify and classify road images under the different environmental conditions. To be specific, the classifying the sample data set of the road segment based on a divided environmental condition includes: classifying the sample data set of the road segment based on an environment classification model to obtain environmental conditions corresponding to road images in the sample data set; and using road images with a same environmental condition as a road image set of the road segment under an environmental condition.

Then, each segmented road image set can be manually annotated with various targets that need to be perceived by autonomous driving or assisted driving, such as pedestrians, other vehicles, lane lines, zebra crossings, drivable areas, traffic lights, and traffic signs, which is not limited in this application.

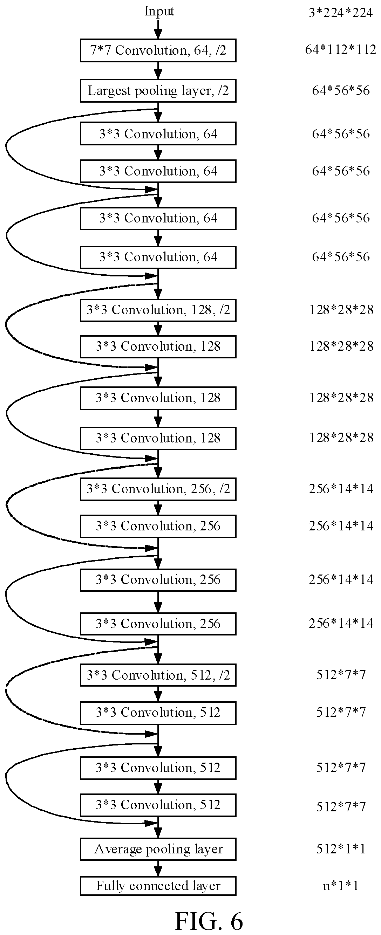

In a possible implementation, the foregoing environment classification model may use a deep learning model. FIG. 6 is a schematic diagram of a structure of a deep learning model according to an exemplary embodiment. As shown in FIG. 6, the environment classification model uses a residual block as a basic convolution module, and n is a quantity of categories of environmental conditions output by the environment classification model, such as a quantity of categories of environmental conditions divided based on different lighting and weather conditions.

For example, the environment classification model includes a convolution layer, a first pooling layer, a plurality of residual blocks connected in sequence, a second pooling layer, and a fully connected layer. In FIG. 6, the convolution layer includes a 7*7 convolution kernel, 64 channels, and a step of 2. The first pooling layer is the largest pooling layer, and includes a step of 2. The second pooling layer is an average pooling layer. A plurality of residual blocks connected in sequence are included between the first pooling layer and the second pooling layer. In addition, a head and a tail of a solid arrow correspond to feature maps of the same size, while a head and a tail of a dashed arrow correspond to feature maps of different sizes.

Correspondingly, for any one of the road images in the sample data set, the first convolution layer is configured to perform feature extraction on the road image to obtain a first feature map; the first pooling layer is configured to downsample the first feature map to obtain a second feature map; the plurality of residual blocks connected in sequence are configured to perform feature extraction on the second feature map to obtain a third feature map; the second pooling layer is configured to downsample the third feature map to obtain a fourth feature map; and the fully connected layer is configured to output, based on the fourth feature map, an environmental condition corresponding to the road image. For example, the fully connected layer is responsible for outputting probabilities that the road image belongs to the environmental conditions, and a category with the highest probability is the environmental condition corresponding to the road image.

504: The cloud server trains perception models of the plurality of road segments under the different environmental conditions based on the road image sets of the plurality of road segments under the different environmental conditions to obtain a perception model library.

There are generally a plurality of perception models related to the autonomous driving or the assisted driving, including target detection, semantic segmentation, image classification, and the like. The operation uses dynamic target (also referred to as a dynamic obstacle) detection as an example to describe a training process of a perception model. For example, this embodiment of this application defines the dynamic target as three categories: vehicles, pedestrians, and riders.

In a possible implementation, training, for any one of the road segments, perception models of the road segment under the different environmental conditions based on road image sets of the road segment under the different environmental conditions includes:

5041: Generate, for a road image set of the road segment under an environmental condition, anchors on road images included in the road image set.

The anchors are a series of detection boxes set in advance, also referred to as prior boxes. For example, a quantity and sizes of the anchors may be determined by performing k-means clustering on all annotation boxes of all the road images in the road image set. The annotation box is configured to annotate a target contained in a road image. In other words, the annotation box is a real boundary box manually annotated on the road image. In short, in this embodiment of this application, widths and heights of annotation boxes of the foregoing three types of targets are considered as features, and k-mean clustering is performed to cluster all annotation boxes into class B, and then a centroid of class B is used as a width and height of a corresponding anchor. B refers to a quantity of anchors.

Specifically, the generating anchors on road images included in the road image set includes: clustering annotation boxes on the road images included in the road image set to obtain a plurality of classes, each class including a plurality of data points, and the data points being generated based on height values and width values of the annotation boxes; using a quantity of classes obtained by clustering as a quantity of anchors corresponding to the road image set, and using height values and width values corresponding to centroids of the classes as sizes of the anchors corresponding to the road image set; and generating the anchors on the road images included in the road image set based on the determined quantity of anchors and the determined sizes of the anchors. In other words, the anchors are generated at positions on each road image based on the determined quantity of anchors and the determined sizes of the anchors.

5042: Annotate, for any one of the road images, the anchor on the road image based on an annotation box on the road image, to obtain an annotation category, annotation offset, and annotation confidence of the anchor on the road image.

During the training, each anchor is regarded as a training sample. To train the perception model, each anchor needs to be annotated. For example, annotation content includes a category label, offset, and confidence. The annotation category is configured for indicating a category of a target included in the anchor, the annotation offset is configured for indicating offset between the anchor and a similar annotation box, and the annotation confidence is configured for indicating a degree of confidence that the anchor includes the target. For any one of anchors, a similar annotation box of the anchor is an annotation box having the largest intersection-over-union with the anchor. Then, a category label of the annotation box is used as a category label of the anchor, and offset of the anchor relative to the annotation box is calculated.

Correspondingly, during the target detection, a plurality of anchors are first generated on an input road image, and then prediction categories, prediction offset, and prediction confidence of the anchors are generated. Positions of corresponding anchors can be adjusted based on the prediction offset to obtain predicted boxes. Finally, a predicted box that needs to be output can be screened based on maximum value suppression.

5043: Input the road images included in the road image set into a deep learning model to obtain an output feature map. Each position of the output feature map includes a plurality of anchors.

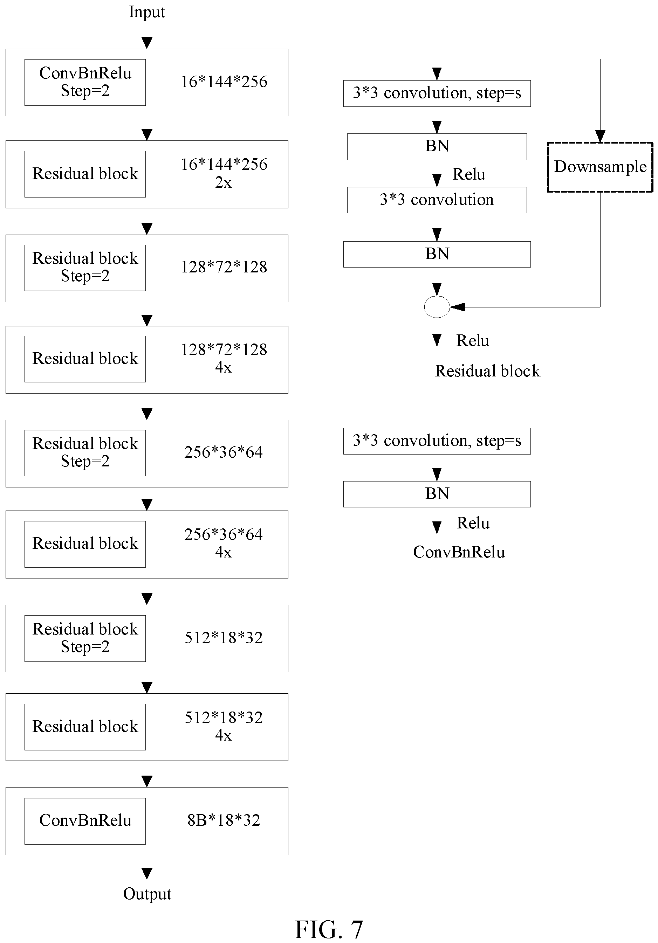

FIG. 7 is an example of a structure of the deep learning model. As shown in FIG. 7, the deep learning model includes a plurality of residual components (Res Blocks) and a plurality of CBL components. The CBL component includes Conv (convolution layer), BN (regularization layer), and a Relu activation function. The Res Block draws on a residual structure in a residual network, including a plurality of convolution layers and a plurality of BN layers. FIG. 7 shows a possible structure of the Res Block, including two convolution layers and two BN layers. In addition, the Res Block further includes a Relu activation function and identity mapping. Downsampling at the identity mapping is configured for compressing a size of an input feature map to facilitate addition to the output feature map. In addition, 2x and 4x in FIG. 7 respectively indicate that a corresponding Res Block is repeated twice and four times.

In this embodiment of this application, a quantity of anchors at the position of the output feature map is B, and resolution of the output feature map is 1/16 of an input image. In addition, a quantity of channels of the output feature map is B*(4+1+c). Four channels are used to provide offset of center point horizontal coordinates, center point vertical coordinates, width values, and height values of the anchors. One channel is used to provide confidence of whether a corresponding anchor includes a target, and c channels are used to provide a category of a target. Because in this embodiment of this application, detected dynamic targets are divided into three categories, the quantity of channels of the output feature map is B*8. In addition, because in this embodiment of this application, a target detection problem is regarded as a regression problem, the foregoing offset is also referred to as an offset regressor.

5044: Train a perception model of the road segment under the environmental condition based on prediction categories, prediction offset, and prediction confidence of the anchors on the output feature map, annotation categories, annotation offset, and annotation confidence of the anchors.

In this embodiment of this application, a loss value of a loss function is calculated based on the prediction categories, prediction offset, and prediction confidence of the anchors on the output feature map, the annotation categories, annotation offset, and annotation confidence of the anchors. With a goal of minimizing the loss value, the perception model of the road segment under the environmental condition is trained. Subsequently, through the training manner of the operation, a corresponding perception model can be trained on the road image set.

The expression of the loss function is as follows:

$$
\begin{aligned}
loss = {} & \alpha \sum_{i=0}^{S^2} \sum_{j=0}^{B} \mathbb{Q}_{ij}^{obj} \left[ \left(x_{ij} - \hat{x}_{ij}\right)^2 + \left(y_{ij} - \hat{y}_{ij}\right)^2 \right] \\
& + \alpha \sum_{i=0}^{S^2} \sum_{j=0}^{B} \mathbb{Q}_{ij}^{obj} \left[ \left(w_{ij} - \hat{w}_{ij}\right)^2 + \left(h_{ij} - \hat{h}_{ij}\right)^2 \right] \\
& + \beta \sum_{i=0}^{S^2} \sum_{j=0}^{B} \mathbb{Q}_{ij}^{obj} \left(C_{ij} - \hat{C}_{ij}\right)^2 \\
& + \gamma \sum_{i}^{S^2} \mathbb{Q}_{i}^{obj} \sum_{k \in c} \left(p_i(k) - \hat{p}_i(k)\right)^2
\end{aligned}
$$

.

The first line is a center point loss, and the second line is a width and height loss. S represents the width and height of the output feature map. B represents the quantity of anchors at the position on the output feature map. $\mathbb{Q}_{ij}^{obj}$ represents whether the target appears in a $j$th anchor at an $i$th position of the output feature map. If there is the target at a position of $(i,j)$, a value is 1. If there is no target at the position of $(i,j)$, the value is 0. $(x_{ij}, y_{ij}, w_{ij}, h_{ij})$ represent the prediction offset of the anchor, which include prediction offset of the center horizontal coordinate, the center vertical coordinate, the width value, and the height value of the anchor respectively. $(\hat{x}_{ij}, \hat{y}_{ij}, \hat{w}_{ij}, \hat{h}_{ij})$ represent the annotation offset of the anchor, which include annotation offset of the center horizontal coordinate, the center vertical coordinate, the width value, and the height value of the anchor respectively.

The third line is a confidence loss. The fourth line is a category loss, that is, a sum of losses of categories is calculated on the output feature map. $\alpha$, $\beta$, $\gamma$ represent weight values of the losses. For example, the weight value $\alpha$ is the largest. $i,j,k,c$ are all integers, and $k,c$ are greater than 0. $c$ represents a quantity of categories of the target. $\mathbb{Q}_{i}^{obj}$ represents whether the target appears at the $i$th position of the output feature map. $C_{ij}$ represents the prediction confidence. $\hat{C}_{ij}$ represents the annotation confidence. $p_i(k)$ represents the prediction category. $\hat{p}_i(k)$ represents the annotation category.

505: The cloud server acquires current traveling information of the to-be-controlled vehicle, the traveling information being configured for indicating a to-be-traveled road segment of the to-be-controlled vehicle during traveling and a target environmental condition when the to-be-controlled vehicle is on a corresponding to-be-traveled road segment.

The operation is the same as the foregoing operation 401. Details are not described herein again.

506: The cloud server searches for a target perception model of the to-be-traveled road segment under the target environmental condition from the perception model library, and sends the target perception model to the to-be-controlled vehicle.

In this embodiment of this application, to acquire all matching target perception models in advance, the cloud server searches for target perception models of the to-be-traveled road segments under corresponding target environmental conditions from the perception model library in response to acquisition of the plurality of to-be-traveled road segments. A target perception model matches a to-be-traveled road segment during traveling of the to-be-controlled vehicle and a target environmental condition when the to-be-controlled vehicle is on a corresponding to-be-traveled road segment. Alternatively, the target perception model is acquired in real time, so that the to-be-traveled road segment is a to-be-traveled road segment where the to-be-controlled vehicle is currently located. In this case, a manner of acquiring the target perception model of the to-be-traveled road segment under the target environmental condition from a perception model library may be that the cloud server acquires the target perception model of the to-be-traveled road segment under the target environmental condition from the perception model library. The target perception model matches the to-be-traveled road segment where the to-be-controlled vehicle is currently located, and the target environmental condition when the to-be-controlled vehicle is on the corresponding to-be-traveled road segment.

In a possible implementation, the to-be-traveled road segment is a road segment on a current navigation route of the to-be-controlled vehicle. Acquiring the target environmental condition when the to-be-controlled vehicle is on the corresponding to-be-traveled road segment includes: acquiring a road condition of the to-be-controlled vehicle during the traveling based on the current navigation route; determining, based on the road condition and traveling speed of the to-be-controlled vehicle during the traveling, time when the to-be-controlled vehicle is on the to-be-traveled road segments; and determining, for any one of the to-be-traveled road segments, based on the time when the to-be-controlled vehicle is on the to-be-traveled road segment, the target environmental condition when the to-be-controlled vehicle is on the to-be-traveled road segment.

The current navigation route is a traveling path currently and automatically planned by the to-be-controlled vehicle. In an example in which environmental conditions include lighting and weather, a lighting category of the to-be-controlled vehicle when the to-be-controlled vehicle is on each road segment can be determined by estimating time when the to-be-controlled vehicle is on the road segment, and then a weather category of the to-be-controlled vehicle when the to-be-controlled vehicle is on the road segment can be determined by pulling a weather forecast, so that perception models of the road segments under different lighting and weather conditions can be delivered from the cloud server to the to-be-controlled vehicle in advance.

For example, the manner of acquiring target perception models of the to-be-traveled road segments under corresponding target environmental conditions from the perception model library may be to acquire the road condition of the to-be-controlled vehicle during the traveling based on the current navigation route; and determine, based on the road condition and traveling speed of the to-be-controlled vehicle during the traveling, time when the to-be-controlled vehicle is on the to-be-traveled road segments. In this way, the target perception models of the to-be-traveled road segments under the corresponding target environmental conditions are acquired from the perception model library in sequence based on the time when the to-be-controlled vehicle is on the to-be-traveled road segments. Correspondingly, the cloud server can acquire the corresponding perception models from the perception model library and deliver the perception models to the to-be-controlled vehicle in sequence based on the time when the to-be-controlled vehicle is on the to-be-traveled road segments. To be specific, a target perception model of a to-be-traveled road segment that the to-be-controlled vehicle passes first is delivered first, and a target perception model of a road segment that the to-be-controlled vehicle passes later is delivered later.

507: The to-be-controlled vehicle calls the target perception model to perform a perception task on the to-be-traveled road segment to obtain a perception result; and controls, based on the obtained perception result, the to-be-controlled vehicle to travel on the to-be-traveled road segment.

The operation is the same as the foregoing operation 303. Details are not described herein again.

In a possible implementation, the foregoing environment classification model and various sensors are deployed on the to-be-controlled vehicle. When the target perception model is called, an environmental condition of the to-be-traveled road segment where the to-be-controlled vehicle is currently located can be determined based on the environment classification model and the sensors, to select a target perception model that needs to be called currently. In view of this, the calling a target perception model matching a to-be-traveled road segment where the to-be-controlled vehicle is currently located from the plurality of target perception models to perform the perception task includes: acquiring, based on an environment classification model deployed on the to-be-controlled vehicle, a first environmental condition of the to-be-traveled road segment where the to-be-controlled vehicle is currently located; acquiring, based on a sensor deployed on the to-be-controlled vehicle, a second environmental condition of the to-be-traveled road segment where the to-be-controlled vehicle is currently located; determining, based on the first environmental condition and the second environmental condition, a final environmental condition of the to-be-traveled road segment where the to-be-controlled vehicle is currently located; and calling a target perception model of the to-be-traveled road segment where the to-be-controlled vehicle is currently located under the final environmental condition from the plurality of target perception models.

For example, the to-be-controlled vehicle can acquire positioning information in real time based on a global position system (GPS) module deployed on the to-be-controlled vehicle, and then determines, based on the acquired positioning information, the to-be-traveled road segment where the to-be-controlled vehicle is currently located. During determining the environmental condition of the to-be-traveled road segment where the to-be-controlled vehicle is currently located, the environmental condition of the to-be-traveled road segment where the to-be-controlled vehicle is currently located, which is referred to as the first environmental condition in this specification, can be determined by the deployed environment classification model. In addition, the environmental condition of the to-be-traveled road segment where the to-be-controlled vehicle is currently located, which is referred to as the second environmental condition in this specification, can alternatively be determined by the sensor deployed on the to-be-controlled vehicle. For example, a rain sensor is used to identify whether it is raining on the road segment where the to-be-controlled vehicle is currently located, and a light sensor is used to identify a lighting category of the road segment where the to-be-controlled vehicle is currently located. Finally, the environmental condition of the to-be-traveled road segment where the to-be-controlled vehicle is currently located (that is, the final environmental condition) is comprehensively determined based on the first environmental condition output by the environment classification model and the second environmental condition output by the sensor. For example, this embodiment of this application, the first environmental condition output by the environment classification model is used to correct the second environmental condition output by the sensor. In other words, the second environmental condition of the sensor is used as a reference.

In addition, the environmental condition of the to-be-controlled vehicle when the to-be-controlled vehicle is on the to-be-traveled road segment may be determined by the cloud server based on related information reported by the to-be-controlled vehicle, or may be determined by the to-be-controlled vehicle based on the related information, which is not limited in this application.

508: The cloud server acquires road images collected by a plurality of to-be-controlled vehicles during traveling; updates, based on the road images collected by the plurality of to-be-controlled vehicles, road image sets of the road segments under the different environmental conditions within the target geographic range; and trains, based on updated road image sets of the road segments under the different environmental conditions, perception models of the road segments under the different environmental conditions.

When increasingly more vehicles use a slice-based perception solution to perform a perception task, in other words, when the slice-based perception solution is applied to enough vehicles, it is no longer necessary to cooperate with various device manufacturers and car manufacturers to reflow road images. Instead, a data reflow module can be disposed inside a perception model to automatically reflow the road images when a vehicle is in an autonomous driving mode or an assisted driving mode, thereby implementing a closed-loop iteration of model training-model delivery-data reflow-model training.

The vehicle control solution provided in embodiments of this application can implement slice-based perception. In detail, for any one of road segments obtained by road segmentation, road image sets of the road segment under different environmental conditions are constructed, so that perception models of the road segment under the different environmental conditions are trained based on the road image sets of the road segment under the different environmental conditions, to form a perception model library. A perception model is configured to perform a perception task on a vehicle under an environmental condition on a road segment. In this way, during traveling of a to-be-controlled vehicle, the most adapted target perception model can be dynamically called from the perception model library for driving perception based on a to-be-traveled road segment of the to-be-controlled vehicle during the traveling and an environmental condition when the to-be-controlled vehicle is on a corresponding to-be-traveled road segment. Because different perception models are trained for different road segments and different environmental conditions, during the traveling of the vehicle, the most adapted target perception model can be used for driving perception for different to-be-traveled road segments and the different environmental conditions. Therefore, through a plurality of adapted target perception models, all possible situations that may occur during the traveling of the vehicle can be accurately perceived, providing a good perception effect, and ensuring driving safety.

In conclusion, in embodiments of this application, more accurate perception can be achieved and the perception difficulty of a model is greatly reduced, thereby achieving a more precise and robust perception effect. In addition, it is also conducive to optimizing various long tail situations, improving user experience, and ultimately promoting the implementation and promotion of autonomous driving.

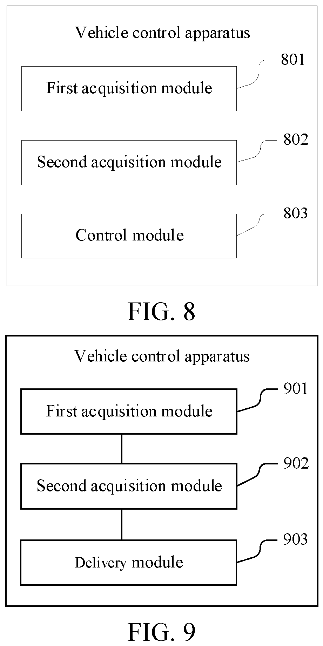

FIG. 8 is a schematic diagram of a structure of a vehicle control apparatus according to an exemplary embodiment. Refer to FIG. 8. The apparatus includes:

a first acquisition module 801, configured to acquire current traveling information of a to-be-controlled vehicle, the traveling information being configured for indicating a to-be-traveled road segment of the to-be-controlled vehicle during traveling and a target environmental condition when the to-be-controlled vehicle is on a corresponding to-be-traveled road segment;

a second acquisition module 802, configured to acquire a target perception model of the to-be-traveled road segment under the target environmental condition from a perception model library, the perception model library being configured to store perception models of a plurality of road segments under different environmental conditions, and for any one of the road segments, the perception models of the road segment under the different environmental conditions being trained based on road image sets of the road segment under the different environmental conditions; and

a control module 803, configured to call the target perception model to perform a perception task on the to-be-traveled road segment to obtain a perception result, and control, based on the perception result, the to-be-controlled vehicle to travel on the to-be-traveled road segment.

The vehicle control solution provided in embodiments of this application can implement slice-based perception. In detail, for any one of road segments obtained by road segmentation, road image sets of the road segment under different environmental conditions are constructed, so that perception models of the road segment under the different environmental conditions are trained based on the road image sets of the road segment under the different environmental conditions, to form a perception model library. A perception model is configured to perform a perception task on a vehicle under an environmental condition on a road segment. In this way, during traveling of a to-be-controlled vehicle, the most adapted target perception model can be dynamically called from the perception model library for driving perception based on a to-be-traveled road segment of the to-be-controlled vehicle during the traveling and an environmental condition when the to-be-controlled vehicle is on a corresponding to-be-traveled road segment. Because different perception models are trained for different road segments and different environmental conditions, during the traveling of the vehicle, the most adapted target perception model can be used for driving perception for different to-be-traveled road segments and the different environmental conditions. Therefore, through a plurality of adapted target perception models, all possible situations that may occur during the traveling of the vehicle can be accurately perceived, providing a good perception effect, and ensuring driving safety.

In a possible implementation, a quantity of the to-be-traveled road segments is more than one, and the plurality of to-be-traveled road segments are road segments on a current navigation route of the to-be-controlled vehicle. The second acquisition module is configured to acquire target perception models of the to-be-traveled road segments under corresponding target environmental conditions from the perception model library in response to acquisition of the plurality of to-be-traveled road segments. For a plurality of target perception models, a target perception model matches a to-be-traveled road segment and a target environmental condition when the to-be-controlled vehicle is on a corresponding to-be-traveled road segment.

The control module is configured to call, during the traveling of the to-be-controlled vehicle, when the to-be-controlled vehicle reaches a to-be-traveled road segment, a target perception model matching a to-be-traveled road segment where the to-be-controlled vehicle is currently located from the plurality of target perception models to perform the perception task, and control, based on the obtained perception result, the to-be-controlled vehicle to travel on the to-be-traveled road segment where the to-be-controlled vehicle is currently located.

In a possible implementation, the second acquisition module is configured to: acquire a road condition of the to-be-controlled vehicle during the traveling based on the current navigation route; determine, based on the road condition and traveling speed of the to-be-controlled vehicle during the traveling, time when the to-be-controlled vehicle is on the to-be-traveled road segments; and determine, for any one of the to-be-traveled road segments, based on the time when the to-be-controlled vehicle is on the to-be-traveled road segment, the target environmental condition when the to-be-controlled vehicle is on the to-be-traveled road segment.

In a possible implementation, the to-be-traveled road segment is a road segment on the current navigation route of the to-be-controlled vehicle. The second acquisition module is configured to: acquire a road condition of the to-be-controlled vehicle during the traveling based on the current navigation route; determine, based on the road condition and traveling speed of the to-be-controlled vehicle during the traveling, time when the to-be-controlled vehicle is on the to-be-traveled road segments; and acquire, based on the time when the to-be-controlled vehicle is on the to-be-traveled road segments, the target perception models of the to-be-traveled road segments under the corresponding target environmental conditions from the perception model library in sequence.

In a possible implementation, the to-be-traveled road segment is a to-be-traveled road segment where the to-be-controlled vehicle is currently located. The second acquisition module is configured to acquire a target perception model of the to-be-traveled road segment under the target environmental condition from a perception model library. The acquired target perception model matches the to-be-traveled road segment where the to-be-controlled vehicle is currently located, and the target environmental condition when the to-be-controlled vehicle is on the corresponding to-be-traveled road segment.

The control module is configured to call the acquired target perception model to perform the perception task on the to-be-traveled road segment where the to-be-controlled vehicle is currently located to obtain the perception result, and control, based on the obtained perception result, the to-be-controlled vehicle to travel on the to-be-traveled road segment where the to-be-controlled vehicle is currently located.

In a possible implementation, the control module is configured to: acquire, based on an environment classification model deployed on the to-be-controlled vehicle, a first environmental condition of the to-be-traveled road segment where the to-be-controlled vehicle is currently located; acquire, based on a sensor deployed on the to-be-controlled vehicle, a second environmental condition of the to-be-traveled road segment where the to-be-controlled vehicle is currently located; determine, based on the first environmental condition and the second environmental condition, a final environmental condition of the to-be-traveled road segment where the to-be-controlled vehicle is currently located; and call a target perception model of the to-be-traveled road segment where the to-be-controlled vehicle is currently located under the final environmental condition from the plurality of target perception models.

Any combination of the foregoing exemplary technical solutions may be used to obtain an exemplary embodiment of the present disclosure. Details are not described herein.

FIG. 9 is a schematic diagram of a structure of another vehicle control apparatus according to an exemplary embodiment. Refer to FIG. 9. The apparatus includes:

a first acquisition module 901, configured to acquire current traveling information of a to-be-controlled vehicle, the traveling information being configured for indicating a to-be-traveled road segment of the to-be-controlled vehicle during traveling and a target environmental condition when the to-be-controlled vehicle is on a corresponding to-be-traveled road segment;

a second acquisition module 902, configured to search for a target perception model of the to-be-traveled road segment under the target environmental condition from a perception model library, the perception model library being configured to store perception models of a plurality of road segments under different environmental conditions, and for any one of the road segments, the perception models of the road segment under the different environmental conditions being trained based on road image sets of the road segment under the different environmental conditions; and

a delivery module 903, configured to deliver the target perception model to the to-be-controlled vehicle, the to-be-controlled vehicle being configured to: call the target perception model to perform a perception task on the to-be-traveled road segment to obtain a perception result; and control, based on the perception result, the to-be-controlled vehicle to travel on the to-be-traveled road segment.

The vehicle control solution provided in embodiments of this application can implement slice-based perception. In detail, for any one of road segments obtained by road segmentation, road image sets of the road segment under different environmental conditions are constructed, so that perception models of the road segment under the different environmental conditions are trained based on the road image sets of the road segment under the different environmental conditions, to form a perception model library. A perception model is configured to perform a perception task on a vehicle under an environmental condition on a road segment. In this way, during traveling of a to-be-controlled vehicle, the most adapted target perception model can be dynamically called from the perception model library for driving perception based on a to-be-traveled road segment of the to-be-controlled vehicle during the traveling and an environmental condition when the to-be-controlled vehicle is on a corresponding to-be-traveled road segment. Because different perception models are trained for different road segments and different environmental conditions, during the traveling of the vehicle, the most adapted target perception model can be used for driving perception for different to-be-traveled road segments and the different environmental conditions. Therefore, through a plurality of adapted target perception models, all possible situations that may occur during the traveling of the vehicle can be accurately perceived, providing a good perception effect, and ensuring driving safety.

In a possible implementation, the apparatus further includes:

a segmentation module, configured to: acquire, for any one of roads within a target geographic range, a segmentation granularity matching a road type of the road; and segment the road based on the segmentation granularity to obtain road segments of the road, an overlapping area existing between any two adjacent road segments of the road.

In a possible implementation, the apparatus further includes:

a construction module, configured to: acquire road images collected by a plurality of vehicles within the target geographic range and position information of the plurality of vehicles when the road images are collected; and classify, based on the position information, the acquired road images into different road segments within the target geographic range to obtain sample data sets of the road segments within the target geographic range; and classify, for any one of the road segments, the sample data set of the road segment based on a divided environmental condition to obtain road image sets of the road segment under the different environmental conditions, a road image set including a road image of the road segment under an environmental condition.

**In** a possible implementation, for a target perception task, the perception models of the road segment under the different environmental conditions are trained based on the road image sets of the road segment under the different environmental conditions and a model training method matching the target perception task. The perception model is configured to perform the target perception task.

**In** a possible implementation, the apparatus further includes:

a training module, configured to: acquire a road image collected by the to-be-controlled vehicle during the traveling; update, based on road images collected by a plurality of to-be-controlled vehicles, road image sets of the road segments under the different environmental conditions within the target geographic range; and train, based on updated road image sets of the road segments under the different environmental conditions, perception models of the road segments under the different environmental conditions.

In a possible implementation, the training module is further configured to:

generate, for any one of the road image sets of the road segment, anchors on road images included in the road image set;

annotate, for any one of the road images, the anchor on the road image based on an annotation box on the road image, to obtain an annotation category, annotation offset, and annotation confidence of the anchor,

the annotation box being configured for annotating a target included in the road image, the annotation category being configured for indicating a category of a target included in the anchor, the annotation offset being configured for indicating offset between the anchor and a similar annotation box, and the annotation confidence being configured for indicating a degree of confidence that the anchor includes the target;

input the road images included in the road image set into a deep learning model to obtain an output feature map, each position of the output feature map including a plurality of anchors; and train a perception model of the road segment under an environmental condition based on prediction categories, prediction offset, and prediction confidence of the anchors on the output feature map, annotation categories, annotation offset, and annotation confidence of the anchors, a perception model of the road segment under an environmental condition.

In a possible implementation, the training module is further configured to:

cluster annotation boxes on the road images included in the road image set to obtain a plurality of classes, each class including a plurality of data points, and the data points being generated based on height values and width values of the annotation boxes;

use a quantity of classes obtained by clustering as a quantity of anchors corresponding to the road image set, and use height values and width values corresponding to centroids of the classes as sizes of the anchors corresponding to the road image set; and

generate the anchors on the road images included in the road image set based on the quantity of anchors and the sizes of the anchors.

In a possible implementation, the construction module is configured to:

classify the sample data set of the road segment based on an environment classification model to obtain environmental conditions corresponding to road images in the sample data set; and

use road images with a same environmental condition as a road image set of the road segment under an environmental condition,

the environment classification model including a convolution layer, a first pooling layer, a plurality of residual blocks connected in sequence, a second pooling layer, and a fully connected layer; and

for any one of the road images in the sample data set, the first convolution layer being configured to perform feature extraction on the road image to obtain a first feature map; the first pooling layer being configured to downsample the first feature map to obtain a second feature map; the plurality of residual blocks connected in sequence being configured to perform feature extraction on the second feature map to obtain a third feature map; the second pooling layer being configured to downsample the third feature map to obtain a fourth feature map; and the fully connected layer being configured to output, based on the fourth feature map, an environmental condition corresponding to the road image.

Any combination of the foregoing exemplary technical solutions may be used to obtain an exemplary embodiment of the present disclosure. Details are not described herein.

When the vehicle control apparatus provided in the foregoing embodiment performs vehicle control, only division of the foregoing function modules is used as an example for description. In actual application, the foregoing functions may be allocated to different function modules for implementation based on requirements. In other words, an internal structure of the apparatus is divided into different function modules, to complete all or some of the foregoing described functions. In addition, the vehicle control apparatus and vehicle control method embodiments provided in the foregoing embodiments are based on the same conception. For details of the specific implementation process, reference may be made to the method embodiments, and details are not described herein again.

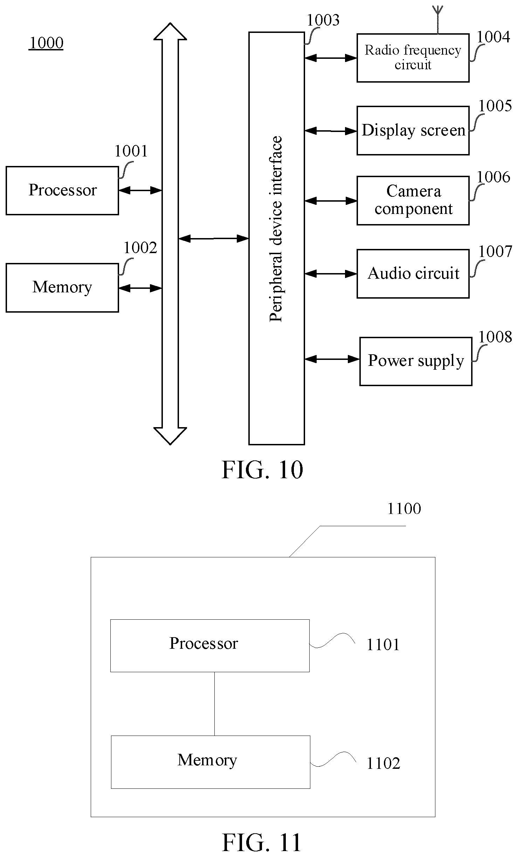

FIG. 10 is a block diagram of a structure of a computer device 1000 according to an exemplary embodiment of this application. For example, the computer device 1000 may be implemented as a terminal in a vehicle. Generally, the computer device 1000 includes: a processor 1001 and a memory 1002.

The processor 1001 may include one or more processing cores, for example, a 4-core processor or an 8-core processor. The processor 1001 may be implemented in at least one hardware form of a digital signal processor (DSP), a field-programmable gate array (FPGA), and a programmable logic array (PLA). The processor 1001 may also include a main processor and a coprocessor. The main processor is a processor configured to process data in an awake state, and is also referred to as a central processing unit (CPU). The coprocessor is a low-power processor configured to process data in a standby state. In a possible implementation, the processor 1001 may be integrated with a graphics processing unit (GPU). The GPU is configured to render and draw content that needs to be displayed on a display screen. In some embodiments, the processor 1001 may further include an artificial intelligence (AI) processor. The AI processor is configured to process computing operations related to machine learning.

The memory 1002 may include one or more computer-readable storage media. The computer-readable storage medium may be non-transient. The memory 1002 may further include a high-speed random access memory and a nonvolatile memory, for example, one or more disk storage devices or flash storage devices. In a possible implementation, the non-transitory computer-readable storage medium in the memory 1002 is configured to store a computer program, and the computer program is configured to be executed by the processor 1001 to implement the vehicle control method provided in the method embodiments of this application.

In a possible implementation, the computer device 1000 further includes: a peripheral device interface 1003 and at least one peripheral device. The processor 1001, the memory 1002, and the peripheral device interface 1003 may be connected via a bus or a signal cable. Each peripheral device may be connected to the peripheral device interface 1003 via a bus, a signal cable, or a circuit board. Specifically, the peripheral device includes at least one of a radio frequency circuit 1004, a display screen 1005, a camera component 1006, an audio circuit 1007, and a power supply 1008.

A person skilled in the art may understand that the structure shown in FIG. 10 constitutes no limitation on the computer device 1000, and the computer device 1000 may include more or fewer components than those shown in the figure, or some components may be combined, or a different component deployment may be used.

FIG. 11 is a schematic diagram of a structure of a computer device 1100 according to an embodiment of this application. For example, the computer device 1100 may be implemented as a cloud server.

The computer device 1100 may be a server. The computer device 1100 may vary a lot due to different configurations or performance, and may include one or more central processing units (CPU) 1101 and one or more memories 1102. The memory 1102 stores a computer program, and the computer program is loaded and executed by the central processing unit 1101 to implement the vehicle control method provided in the foregoing method embodiments. Certainly, the computer device 1100 may further include components such as a wired or wireless network interface, a keyboard, and an input/output (I/O) interface, to facilitate input and output. The computer device 1100 may further include another component configured to implement a function of a device. Details are not further described herein.

In an exemplary embodiment, a computer-readable storage medium is further provided, such as a memory including program code. The program code may be executed by a processor of a computer device to implement the vehicle control method provided in the foregoing embodiments. For example, the computer-readable storage medium may be a read-only memory (ROM), a random access memory (RAM), a compact disc read-only memory (CD-ROM), a magnetic tape, a floppy disk, and an optical data storage device.

In an exemplary embodiment, a computer program product is further provided, including a computer program. The computer program is stored in a computer-readable storage medium, a processor of a computer device reads the computer program from the computer-readable storage medium, and the processor executes the computer program to cause the computer device to perform the foregoing vehicle control method.

A person of ordinary skill in the art may understand that all or some of the operations of the foregoing embodiments may be implemented by hardware, or may be implemented by a computer program instructing relevant hardware. The computer program may be stored in a computer-readable storage medium. The foregoing storage medium may be a read-only memory, a magnetic disk, an optical disc, or the like.

The foregoing descriptions are merely exemplary embodiments of this application, but are not intended to limit this application. Any modification, equivalent replacement, or improvement made within the spirit and principle of this application shall fall within the protection scope of this application.

**Claims**

1. A vehicle control method, performed by a computer device, the method comprising:

   acquiring current traveling information of a vehicle, the current traveling information indicating at least one road segment being or to be travelled by the vehicle and an environmental condition corresponding to a respective road segment of the at least one road segment;
   acquiring, from a perception model library, a perception model for the at least one road segment and the corresponding environmental condition, the perception model library storing a plurality of perception models each for one of a plurality of road segments under one of a plurality of environmental conditions, wherein each perception model is trained based on a road image set of the respective road segment each under one of the plurality of environmental conditions;
   performing a perception task on the at least one road segment using the acquired perception model to obtain a perception result for controlling the vehicle to travel on the at least one road segment.

2. The method according to claim 1, wherein there are a plurality of road segments, which are road segments on a current navigation route of the vehicle, and the acquiring, from a perception model library, a perception model for the at least one road segment and the corresponding environmental condition comprises:

   acquiring, from the perception model library, a perception model for each road segment and the corresponding environmental condition, in response to acquisition of the plurality of road segments, wherein one perception model of the plurality of perception models corresponds to one road segment and one environmental condition corresponding to a respective one of the plurality of road segment; and
   the performing a perception task on the at least one road segment using the acquired perception model to obtain a perception result for controlling the vehicle to travel on the at least one road segment comprises:
   during traveling on the current navigation route, each time the vehicle reaches a road segment of the plurality of road segments of the current navigation route, performing the perception task using a perception model corresponding to this road segment from the plurality of perception models to obtain a perception result for controlling the vehicle to travel on this road segment.

3. The method according to claim 2, wherein the environmental condition when the vehicle is on a corresponding road segment of the current navigation route is acquired by:

   acquiring a road condition of the at least one road segment on the current navigation route when the vehicle is travelling the current navigation route;
   determining, based on the road condition of the at least one road segment and a traveling speed of the vehicle during the traveling, a time period during which the vehicle is on the at least one road segment; and
   determining, for any one of the at least one road segment, based on the time period during which the vehicle is on the at least one road segment, the environmental condition when the vehicle is on the at least one road segment.

4. The method according to claim 2, wherein the acquiring, from the perception model library, a perception models for the at least road segment and the corresponding environmental condition comprises:

   acquiring a road condition of the at least one road segment on the current navigation route when the vehicle is travelling the current navigation route;
   determining, based on the road condition of the at least one road segment and a traveling speed of the vehicle during the traveling, a time period during which the vehicle is on the at least one road segment; and

acquiring, from the perception model library and based on the time period during which the vehicle is on the at least one road segment, a perception model for the at least one road segment and the corresponding environmental condition in sequence.

5. The method according to claim 2, wherein performing the perception task using a perception model corresponding to this road segment from the plurality of perception models to obtain a perception result comprises:

acquiring, based on an environment classification model deployed on the vehicle, a first environmental condition of this road segment where the vehicle is currently located;

acquiring, based on a sensor deployed on the vehicle, a second environmental condition of the road segment where the vehicle is currently located;

determining, based on the first environmental condition and the second environmental condition, a final environmental condition of the road segment where the vehicle is currently located; and

performing the perception task using a perception model for this road segment where the vehicle is currently located under the final environmental condition from the plurality of perception models, to obtain the perception result.

6. The method according to claim 1, wherein the at least one road segment is a road segment where the vehicle is currently located, and the acquiring, from a perception model library, a perception model for the at least one road segment and the corresponding environmental condition comprises:

acquiring, from the perception model library, the perception model for the at least one road segment and the environmental condition, the acquired perception model corresponding to the road segment where the vehicle is currently located, and corresponding to the environmental condition when the vehicle is on the road segment; and

the performing a perception task on the at least one road segment using the acquired perception model to obtain a perception result for controlling the vehicle to travel on the at least one road segment comprises:

performing the perception task on the road segment where the vehicle is currently located using the acquired perception model, to obtain the perception result for controlling the vehicle to travel on the road segment where the vehicle is currently located.

7. A vehicle control method, performed by a computer device, the method comprising:

acquiring current traveling information of a vehicle, the current traveling information indicating at least one road segment being or to be travelled by the vehicle and an environmental condition corresponding to a respective road segment of the at least one road segment;

searching for a perception model for the at least one road segment and the corresponding environmental condition from a perception model library, the perception model library storing a plurality of perception models each for one of a plurality of road segments under one of a plurality of environmental conditions, wherein each perception model is trained based on a road image set of the respective road segment each under one of the plurality of environmental conditions; and

delivering the searched perception model to the vehicle, the vehicle being configured to:

perform a perception task on the at least one road segment using the delivered perception model to obtain a perception result for controlling the vehicle to travel on the at least one road segment.

8. The method according to claim 7, further comprising:

acquiring, for any one of roads within a target geographic region, a segmentation granularity matching a road type of the road; and

segmenting the road based on the segmentation granularity to obtain road segments of the road, an overlapping area existing between any two adjacent road segments of the road.

9. The method according to claim 7 or 8, further comprising:

acquiring road images collected by a plurality of vehicles within the target geographic region and position information of the plurality of vehicles when the road images are collected;

classifying, based on the position information, the acquired road images into a plurality of sample data sets, each corresponding to a road segments with the target geographic region; and

classifying, for any one of the road segments, the sample data set of the road segment into road image sets of the road segment, each road image set corresponding to one of the plurality of environmental conditions, one road image set comprising road images of one road segment under one environmental condition.

10. The method according to claim 7, wherein for a target perception task, the perception models for the road segment under the plurality of environmental conditions are trained based on the road image sets of the road segment under the plurality of environmental conditions and a model training method matching the target perception task, the trained perception models being configured to perform the target perception task.

11. The method according to claim 9, further comprising:

acquiring a road image collected by the vehicle during the traveling within the target geographic region; updating, based on the road images collected by the plurality of vehicles, road image sets of the road segments under the plurality of environmental conditions within the target geographic region; and training, based on updated road image sets of the road segments under the plurality of environmental conditions, perception models for the road segments under the plurality of environmental conditions.

12. The method according to claim 7, wherein for any one of the road segments, a perception model for the road segment under an environmental condition is trained by:

generating, for a road image set of the road segment under the environmental condition, anchors on road images comprised in the road image set; annotating, for any one of the road images, an anchor on the road image based on an annotation box on the road image, to obtain an annotated category, annotated offset, and annotated confidence of the anchor, the annotation box being configured for annotating a target comprised in the road image, the annotated category indicating a category of a target comprised in the anchor, the annotated offset indicating an offset between the anchor and a similar annotation box, and the annotated confidence indicating a degree of confidence that the anchor comprises the target; inputting the road images comprised in the road image set into a deep learning model to obtain an output feature map, each position of the output feature map comprising a plurality of anchors; and training the perception model for the road segment under the environmental condition based on prediction categories, prediction offset, and prediction confidence of the anchors on the output feature map, annotated categories, annotated offset, and annotated confidence of the anchors.

13. The method according to claim 12, wherein the generating anchors on road images comprised in the road image set comprises:

clustering annotation boxes on the road images comprised in the road image set to obtain a plurality of classes, each class comprising a plurality of data points, and the data points being generated based on height values and width values of the annotation boxes; using a quantity of classes obtained by clustering as a quantity of anchors corresponding to the road image set, and using height values and width values corresponding to cores of the classes as sizes of the anchors corresponding to the road image set; and generating the anchors on the road images comprised in the road image set based on the quantity of anchors and the sizes of the anchors.

14. The method according to claim 9, wherein the classifying the sample data set of the road segment into road image sets of the road segment comprises:

classifying the sample data set of the road segment based on an environment classification model to obtain environmental conditions corresponding to road images in the sample data set; and using road images with a same environmental condition as a road image set of the road segment under an environmental condition, the environment classification model comprising a convolution layer, a first pooling layer, a plurality of residual blocks connected in sequence, a second pooling layer, and a fully connected layer; and for any one of the road images in the sample data set, the first convolution layer being configured to perform feature extraction on the road image to obtain a first feature map; the first pooling layer being configured to downsample the first feature map to obtain a second feature map; the plurality of residual blocks connected in sequence being configured to perform feature extraction on the second feature map to obtain a third feature map;

the second pooling layer being configured to downsample the third feature map to obtain a fourth feature map; and the fully connected layer being configured to output, based on the fourth feature map, an environmental condition corresponding to the road image.

15. A vehicle control apparatus, deployed on a computer device, the apparatus comprising:

a first acquisition module, configured to acquire current traveling information of a vehicle, the current traveling information indicating at least one road segment being or to be travelled by the vehicle and an environmental condition corresponding a respective road segment of the at least one road segment;

a second acquisition module, configured to acquire, from a perception model library, a perception model for the at least one road segment and the corresponding environmental condition, the perception model library storing a plurality of perception models each for one of a plurality of road segments under one of a plurality of environmental conditions, wherein each perception model is trained based on a road image set of the respective road segment each under one of the plurality of environmental conditions; and

a control module, configured to perform a perception task on the at least one road segment using the acquired perception model to obtain a perception result for controlling the vehicle to travel on the at least one road segment.

16. A vehicle control apparatus, deployed on a computer device, the apparatus comprising:

a first acquisition module, configured to acquire current traveling information of a vehicle, the current traveling information indicating at least one road segment being or to be travelled by the vehicle and an environmental condition corresponding to a respective road segment of the at least one road segment;

a second acquisition module, configured to search for a perception model for the at least one road segment and the corresponding environmental condition from a perception model library, the perception model library storing a plurality of perception models each for one of a plurality of road segments under one of a plurality of environmental conditions, wherein each perception model is trained based on a road image set of the respective road segment each under one of the plurality of environmental conditions; and

a delivery module, configured to deliver the searched perception model to the vehicle, the vehicle being configured to: perform a perception task on the at least one road segment using the delivered perception model to obtain a perception result for controlling the vehicle to travel on the at least one road segment.

17. A computer device, comprising a processor and a memory, the memory having a computer program stored therein, the computer program being loaded and executed by the processor to perform the vehicle control method according to any one of claims 1 to 14.

18. A computer-readable storage medium, having a computer program stored thereon, the computer program being loaded and executed by a processor to perform the vehicle control method according to any one of claims 1 to 14.

19. A computer program product, comprising a computer program, the computer program being stored in a computer-readable storage medium, a processor of a computer device reading the computer program from the computer-readable storage medium, and the processor executing the computer program to cause the computer device to perform the vehicle control method according to any one of claims 1 the 14.

FIG. 1

FIG. 2

Acquire current traveling information of a to-be-controlled vehicle, the traveling information being configured for indicating a to-be-traveled road segment of the to-be-controlled vehicle during traveling and a target environmental condition when the to-be-controlled vehicle is on a corresponding to-be-traveled road segment — 301

Acquire a target perception model of the to-be-traveled road segment under the target environmental condition from a perception model library, the perception model library being configured to store perception models of a plurality of road segments under different environmental conditions, and for any one of the road segments, the perception models of the road segment under the different environmental conditions being trained based on road image sets of the road segment under the different environmental conditions — 302

Call the target perception model to perform a perception task on the to-be-traveled road segment to obtain a perception result, and control, based on the perception result, the to-be-controlled vehicle to travel on the to-be-traveled road segment — 303

FIG. 3

A cloud server acquires current traveling information of a to-be-controlled vehicle, the traveling information being configured for indicating a to-be-traveled road segment of the to-be-controlled vehicle during traveling and a target environmental condition when the to-be-controlled vehicle is on a corresponding to-be-traveled road segment — 401

The cloud server searches for a target perception model of the to-be-traveled road segment under the target environmental condition from a perception model library, the perception model library being configured to store perception models of a plurality of road segments under different environmental conditions, and for any one of the road segments, the perception models of the road segment under the different environmental conditions being trained based on road image sets of the road segment under the different environmental conditions — 402

The cloud server delivers the target perception model to the to-be-controlled vehicle, the to-be-controlled vehicle being configured to: call the target perception model to perform a perception task on the to-be-traveled road segment to obtain a perception result; and control, based on the obtained perception result, the to-be-controlled vehicle to travel on the to-be-traveled road segment — 403

FIG. 4

| Cloud server | | To-be-controlled vehicle |
|---|---|---|

501: The cloud server acquires road network data and determines roads within a target geographic range based on the road network data

502: The cloud server acquires, for any one of the roads within the target geographic range, a segmentation granularity matching a road type of the road; and segments the road based on the segmentation granularity

503: The cloud server constructs, for any one of segmented road segments, road image sets of the road segment under different environmental conditions

504: The cloud server trains perception models of the plurality of road segments under the different environmental conditions based on road image sets of the plurality of road segments under the different environmental conditions to obtain a perception model library

505: The cloud server acquires current traveling information of the to-be-controlled vehicle, the traveling information being configured for indicating a to-be-traveled road segment of the to-be-controlled vehicle during traveling and a target environmental condition when the to-be-controlled vehicle is on a corresponding to-be-traveled road segment

506: The cloud server searches for a target perception model of the to-be-traveled road segment under the target environmental condition from a perception model library

506: The cloud server delivers the target perception model to the to-be-controlled vehicle

507: The to-be-controlled vehicle calls the target perception model to perform a perception task on the to-be-traveled road segment to obtain a perception result; and controls, based on the obtained perception result, the to-be-controlled vehicle to travel on the to-be-traveled road segment

508: The cloud server acquires road images collected by a plurality of to-be-controlled vehicles during traveling

508: The cloud server updates, based on the road images collected by the plurality of to-be-controlled vehicles, road image sets of the road segments under the different environmental conditions within the target geographic range; and trains, based on updated road image sets of the road segments under the different environmental conditions, perception models of the road segments under the different environmental conditions

## FIG. 5

| | |
|---|---|
| Input | 3*224*224 |
| 7*7 Convolution, 64, /2 | 64*112*112 |
| Largest pooling layer, /2 | 64*56*56 |
| 3*3 Convolution, 64 | 64*56*56 |
| 3*3 Convolution, 64 | 64*56*56 |
| 3*3 Convolution, 64 | 64*56*56 |
| 3*3 Convolution, 64 | 64*56*56 |
| 3*3 Convolution, 128, /2 | 128*28*28 |
| 3*3 Convolution, 128 | 128*28*28 |
| 3*3 Convolution, 128 | 128*28*28 |
| 3*3 Convolution, 128 | 128*28*28 |
| 3*3 Convolution, 256, /2 | 256*14*14 |
| 3*3 Convolution, 256 | 256*14*14 |
| 3*3 Convolution, 256 | 256*14*14 |
| 3*3 Convolution, 256 | 256*14*14 |
| 3*3 Convolution, 512, /2 | 512*7*7 |
| 3*3 Convolution, 512 | 512*7*7 |
| 3*3 Convolution, 512 | 512*7*7 |
| 3*3 Convolution, 512 | 512*7*7 |
| Average pooling layer | 512*1*1 |
| Fully connected layer | n*1*1 |

FIG. 6

Input

| ConvBnRelu Step=2 | 16*144*256 |

| Residual block | 16*144*256 2x |

| Residual block Step=2 | 128*72*128 |

| Residual block | 128*72*128 4x |

| Residual block Step=2 | 256*36*64 |

| Residual block | 256*36*64 4x |

| Residual block Step=2 | 512*18*32 |

| Residual block | 512*18*32 4x |

| ConvBnRelu | 8B*18*32 |

Output

3*3 convolution, step=s

BN

Relu

3*3 convolution

BN

Downsample

⊕

Relu

Residual block

3*3 convolution, step=s

BN

Relu

ConvBnRelu

FIG. 7

Vehicle control apparatus

First acquisition module ⌐ 801

Second acquisition module ⌐ 802

Control module ⌐ 803

FIG. 8

Vehicle control apparatus

First acquisition module ⌐ 901

Second acquisition module ⌐ 902

Delivery module ⌐ 903

FIG. 9

1000

1001

Processor

1002

Memory

Peripheral device interface

1003

1004

Radio frequency circuit

1005

Display screen

1006

Camera component

1007

Audio circuit

1008

Power supply

FIG. 10

1100

Processor 1101

Memory 1102

FIG. 11

## INTERNATIONAL SEARCH REPORT

| International application No. |
|---|
| **PCT/CN2023/113976** |

**A. CLASSIFICATION OF SUBJECT MATTER**

B60W50/00(2006.01)i; B60W60/00(2020.01)i; B60W40/02(2006.01)i; G06V10/70(2022.01)i

According to International Patent Classification (IPC) or to both national classification and IPC

**B. FIELDS SEARCHED**

Minimum documentation searched (classification system followed by classification symbols)

IPC:B60W,G06V

Documentation searched other than minimum documentation to the extent that such documents are included in the fields searched

Electronic data base consulted during the international search (name of data base and, where practicable, search terms used)

CNTXT, ENTXTC, VEN: 道路, 感知, 模型, 感知模型, 划分, 切分, 分割, 路段, 路径, 路线, 训练, 学习, 智能驾驶, 自动驾驶, 自主驾驶, 天气, 气候, 光照, 晴天, 阴天, 雨, 雾, 雪, 夜, 晚, 白天, lane, region, area, perception, model, separat+, divid+, split+, segment, partition, auto+, driving

**C. DOCUMENTS CONSIDERED TO BE RELEVANT**

| Category* | Citation of document, with indication, where appropriate, of the relevant passages | Relevant to claim No. |
|---|---|---|
| Y | CN 110345955 A (BAIDU USA LLC) 18 October 2019 (2019-10-18) description, paragraphs 36-93, and figures 1-8 | 1-7, 9-19 |
| Y | CN 112744226 A (AUTOMOTIVE INTELLIGENCE & CONTROL OF CHINA (BEIJING) CO., LTD.) 04 May 2021 (2021-05-04) description, paragraphs 33-57, and figures 1-5 | 1-7, 9-19 |
| A | CN 111599183 A (CHINA AUTOMOTIVE INDUSTRY INSTITUTE AUTOMOTIVE TECHNOLOGY CO., LTD. et al.) 28 August 2020 (2020-08-28) entire document | 1-19 |
| A | CN 112277951 A (BEIJING CO WHEELS TECHNOLOGY CO., LTD.) 29 January 2021 (2021-01-29) entire document | 1-19 |
| A | CN 113428177 A (CHINA AUTOMOTIVE INNOVATION CORPORATION TECHNOLOGY CO., LTD.) 24 September 2021 (2021-09-24) entire document | 1-19 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 October 2023** | **06 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/113976** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 115056784 A (XIAOMI AUTOMOBILE TECHNOLOGY CO., LTD.) 16 September 2022 (2022-09-16)<br>    entire document | 1-19 |
| A | CN 110869559 A (PLUSAI CORP.) 06 March 2020 (2020-03-06)<br>    entire document | 1-19 |
| A | DE 102019124339 B3 (AUDI AG) 24 September 2020 (2020-09-24)<br>    entire document | 1-19 |
| A | US 2018067488 A1 (MENTOR GRAPHICS CORP.) 08 March 2018 (2018-03-08)<br>    entire document | 1-19 |

Form PCT/ISA/210 (second sheet) (July 2022)

## INTERNATIONAL SEARCH REPORT
### Information on patent family members

| | International application No. |
|---|---|
| | **PCT/CN2023/113976** |

| Patent document cited in search report | | | Publication date (day/month/year) | Patent family member(s) | | | Publication date (day/month/year) |
|---|---|---|---|---|---|---|---|
| CN | 110345955 | A | 18 October 2019 | JP | 2019182399 | A | 24 October 2019 |
| | | | | JP | 6722312 | B2 | 15 July 2020 |
| | | | | US | 2019302768 | A1 | 03 October 2019 |
| | | | | US | 11378956 | B2 | 05 July 2022 |
| CN | 112744226 | A | 04 May 2021 | | None | | |
| CN | 111599183 | A | 28 August 2020 | | None | | |
| CN | 112277951 | A | 29 January 2021 | | None | | |
| CN | 113428177 | A | 24 September 2021 | | None | | |
| CN | 115056784 | A | 16 September 2022 | | None | | |
| CN | 110869559 | A | 06 March 2020 | US | 2023140540 | A1 | 04 May 2023 |
| | | | | US | 2018348784 | A1 | 06 December 2018 |
| | | | | US | 11573573 | B2 | 07 February 2023 |
| | | | | WO | 2018224877 | A1 | 13 December 2018 |
| | | | | WO | 2018224874 | A1 | 13 December 2018 |
| | | | | EP | 3635497 | A1 | 15 April 2020 |
| | | | | EP | 3635497 | A4 | 21 April 2021 |
| | | | | US | 2018348785 | A1 | 06 December 2018 |
| | | | | US | 11550334 | B2 | 10 January 2023 |
| | | | | CN | 110869936 | A | 06 March 2020 |
| DE | 102019124339 | B3 | 24 September 2020 | | None | | |
| US | 2018067488 | A1 | 08 March 2018 | US | 10678240 | B2 | 09 June 2020 |
| | | | | WO | 2018047114 | A2 | 15 March 2018 |
| | | | | WO | 2018047114 | A3 | 19 April 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211186055